# EUROPEAN PATENT APPLICATION

(11) **EP 1 775 194 A2**
(43) Date of publication of application: **18.04.2007**
(21) Application number: 05023613.2
(22) Date of filing: 28.10.2005
(51) Int. Cl.: B62B 5/00

(54) **Quick-release hook connecting mechanism for trolleys**

(30) Priority: 12.10.2005 IT MI20050358 U
(71) Applicant: Alvi Officine Meccaniche Edgardo Viazzo & C. SRL, 13030 Caresanablot VC (IT)
(72) Inventor: Viazzo, Edgardo, 13030 Caresanablot (Vercelli) (IT)
(74) Representative: Di Iorio, Vincenzo

(57) **Abstract**

A pedal system that allows quick hooking respectively of a simple sack-holder trolley, and a multiple sack-holder trolley to the minor or major side of a linen-holder trolley.

This system consists of a pedal made of a rod with a square profile that drives two hooks into one or two squares that are fixed to the base of the sack-holder trolley.

A spring keeps the pedal in the hooking position, and by pushing the pedal downwards its disengaging is obtained.

The system can easily be mounted also on trolleys that are already in use.

## Description

This invention concerns a reliable quick hooking system, that does not cause noise and is hygienically protected, generally among trolleys and more particularly among simple, single or multiple, sack-holder trolleys and trolleys used for the linen distribution.

There are well-known many systems for hooking trolleys of various types. In any case the hooking of linen sack-holder trolleys to trolleys for distributing linen has particular requirements as it must be easily washed, and have a high hygienic protection, easy handling and use method.

These requirements become particularly important when these trolleys must be moved in ambients as hospitals, restaurants and the like.

The aim of this invention is to provide a system that satisfies these exigencies, as it must be not excessively cumbersome, costly and difficult to be used.

The more important characteristics of the invention are shown in the annexed claims, that are included in this description.

The different characteristics and advantages of the invention shall appear more clearly from the description of preferred embodiments shown in annexed drawings, in which:
On Table 1,

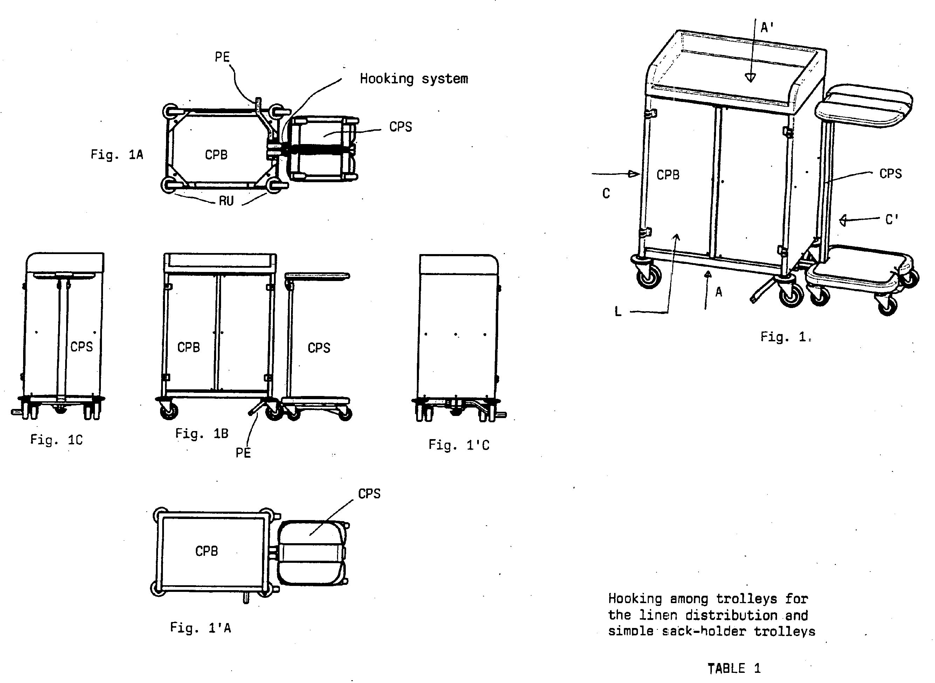

Figure 1 shows a perspective view of a sack-holder trolley CPS with single sack hooked to the minor side of a trolley in parallelepiped form CPB, according to the invention;
Figures 1A and 1A' are views from low side (arrow A) and respectively from high side (arrow A') in Figure 1;
Figure 1B shows a front view (arrow L) of said Figure 1;
Figures 1C and 1'C are lateral views respectively according to arrows C and C' in Figure 1;
On Table 2:

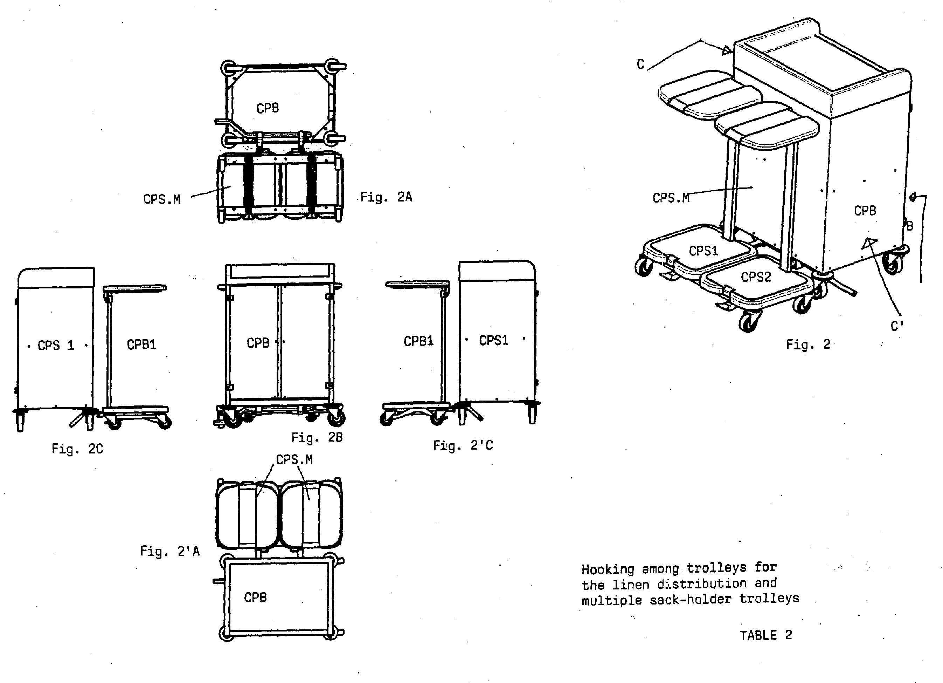

   Figure 2 is a perspective view of a sack-holder trolley holding two sack holders (CPS1 and CPS2) hooked to the rear side of a trolley used for the distribution of linen (CPB);
   Figures 2A and 2'A are views form the low side and respectively from the high side of Figure 2;
   Figure 2B is a front view of Figure 2;
   Figures 2C and 2'C are lateral views respectively in the direction of arrows C and C' of Figure 2;
On Table 3:

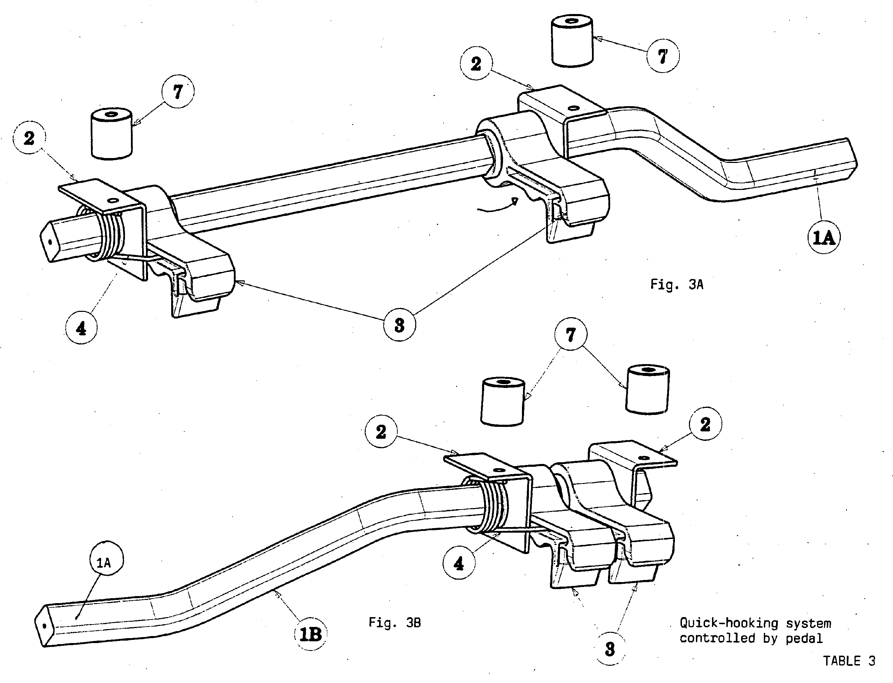

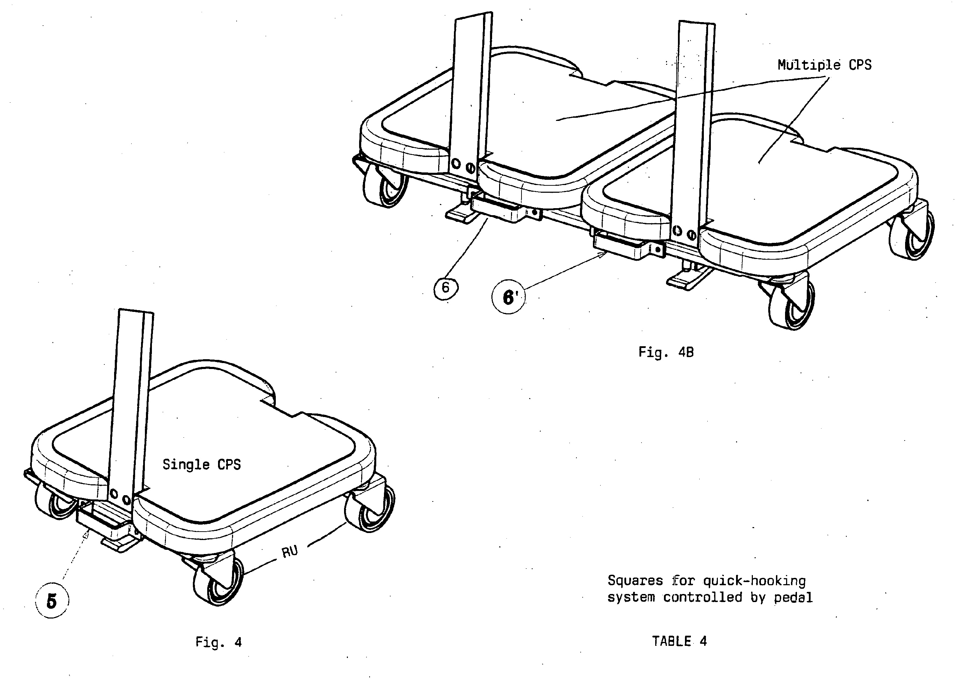

   Figures 3A and 3B are partial perspective views of the pedal system PE; On Table 4, there are shown in perspective view a sack-holder trolley CPS.S with a single sack and a single square 5, and a multiple sack-holder trolley, in particular with two sacks CPS.M with two squares 6 and 6'.

Making now reference to said Figures, it is shown by CPS the single sack-holder trolley, by CPSM the multiple sack-holder trolley, by CPB the linen holder trolley, by PE the pedal associated to CPS/CPSM trolleys, by 2 the supports in reversed L form, by 3 the hooks that are engaged and locked to the squares 5, respectively 6, 6', by 4 the return spring, by 1A and 1B the portions of pedal axle, preferably in tubular form having a quadrangular section and by 7 the interposed bodies used for adjusting the distance from the pavement in relation to the wheel diameters.

In further detail, the invention refers to a sure and easy-used quick hooking system for sack-holder trolleys CPB equipped with male elements 3 (hooks preferably made of plastomeric-elastomeric material) to be joined to sack-holder trolleys CPS supplied with female elements. As above said, two supports suitable for the fastening to the base of distribution trolleys, (Table 3, Part 2), suitable for the rotation of the two shaped hooks and for the fastening of the return springs (Table 3, Part 4).

Two shaped hooks, made of plastic material (Table 3, Part 3) with square hole for the insertion into the pedal rod, and circular seat suitable for the supports.

The hooking end is shaped for allowing an easy but exact coupling into the squares 5/6 fixed to the sack-holder trolley "CPS".

Said sack-holder trolley CPS has a fixed square for single sack-holder (Table 4, Part 5) or two squares for multiple sack-holder, made of structural steel having a section corresponding to the shapes of hooks (Table 4, Part. 6).

The hook dimensions and the pedal rotation allows to keep the overall dimensions of the same hooks in the inside of trolley bumper for the distribution in rest position and to locate the hooks at the right height for a quick and easy insertion into the squares, when the pedal rests on the pavement at limit stop.

The system advantageously allows the keeping of the above mentioned layout, also in case of variation in the wheel diameter, and then of the distances from ground, by suitable bumpers 7 to be mounted under the supports.

The system with pedal operation, at limit stop of the same pedal near the ground, allows an easy, quick and ergonomic hooking operation.

## Claims

1. The modular system for fixing linen sack-holder trolleys to trolleys used for distributing linen, is **characterized by** the use of equal components for hooking both simple and multiple sack-holders, both on the short side and on the long side of trolley used for distribution.

2. System according to claim 1, that can be supplied already installed on distribution trolleys and on sack-holders, and can be mounted on trolleys already in use.

3. Pedal hooking system according to preceding claims, in which the sack holders are approached, while the pedal is kept lowered, and then it is made quickly the hooking releasing the pedal.

4. System according to preceding claims, in which the approaching position to limit stop of the pedal to the pavement allows to work with balanced weight on both feet, and allows an easy handling of sack-holder trolleys.

5. System according to preceding claims, in which it is used plastic material and aluminium, that is materials suitable for washing and disinfection, by which it is eliminated the noise and it is guaranteed optimal hygienic conditions.

6. System substantially according to what described and represented.
